# EUROPÄISCHE PATENTSCHRIFT

(11) **EP 1 030 190 B1**
(45) Veröffentlichungstag und Bekanntmachung des Hinweises auf die Patenterteilung: **11.09.2002**
(21) Anmeldenummer: 00100974.5
(22) Anmeldetag: 19.01.2000
(51) Int. Cl.: G01S 11/14, B66B 1/34

(54) **Einrichtung zur Positionserfassung**
Device for position detection
Dispositif pour détecter la position

(30) Priorität: 29.01.1999 DE 19903644
(43) Veröffentlichungstag der Anmeldung: 23.08.2000
(73) Patentinhaber: K.A. SCHMERSAL GmbH & Co., D-42279 Wuppertal (DE)
(72) Erfinder: Hoepken, Hermann, 45549 Sprockhövel (DE)
(74) Vertreter: Sparing - Röhl - Henseler Patentanwälte

(56) Entgegenhaltungen:
- EP-A- 0 694 792
- DE-A- 2 610 127
- US-A- 4 035 762
- US-A- 4 494 224
- US-A- 5 406 200
- US-A- 5 883 345

## Beschreibung

Die Erfindung betrifft eine Einrichtung zur Positionserfassung eines längs einer vorgegebenen Strecke beweglichen Gegenstandes nach dem Oberbegriff des Anspruchs 1.

Aus EP-A-0 694 792 ist eine derartige Einrichtung zur Positionserfassung eines beweglichen Gegenstandes bekannt, die einen sich entlang eines Verfahrwegs erstreckenden Schallsignalleiter mit vorbestimmter, gleichmäßiger Schallausbreitungsgeschwindigkeit sowie einen mit einem Signalgeber verbundenen, an dem beweglichen Gegenstand befindlichen Signaleinkoppler zum Einkoppeln eines Schallsignals in den Schallsignalleiter aufweist. Hierbei sind an beiden Enden des Schallsignalleiters Signalauskoppler angeordnet, die jeweils mit einem Zähler verbunden sind, wobei die beiden Zähler über einen Taktgeber getaktet und mit einem Subtrahierer für die Ausgangssignale der beiden Zähler verbunden sind. Das Ausgangssignal des Subtrahierers ist als Maß für die Laufzeitdifferenz des eingekoppelten Schallsignals von der Einkopplungsstelle zu den Signalauskopplern von einer Auswerteeinheit zu einem Signal verarbeitbar, das für die momentane Position des beweglichen Gegenstandes auf dem Verfahrweg repräsentativ ist, wobei der Signaleinkoppler mit einer Signalabstandszeit arbeitet, die größer als die Schallaufzeit von einem Ende des Verfahrwegs zum anderen ist.

Mittels der Auswerteeinheit und eines in ihr implementierten Rechenalgorithmus wird den gemessenen Laufzeiten vom Schalleinkoppler zu den Signalauskopplern ein Positionswert zugeordnet. Speziell im Aufzugsbau wird die Auswerteeinheit kalibriert, indem dem Bündigkeitspunkt eines jeden Stockwerks das Ergebnis des Rechenalgorithmus in diesem Punkt zugeordnet sowie die Aufzugsposition mit diesem Zahlenwert assoziiert wird. Aufgrund von temperaturbedingten Gebäude- und/oder Schallsignalleiter-Längenänderungen oder durch Änderung der Schallgeschwindigkeit im Schallsignalleiter durch Temperatur- und Diffusionseffekte verschiebt sich aber die Zuordnung zwischen Bündigkeitspunkt und dem durch die Kalibrierung zugeordneten Zahlenwert.

Aus DE-C-3 608 384 ist es ferner grundsätzlich bekannt, bei einer Weglängenmessung mittels Laufzeitbestimmung von Schallimpulsen neben der Meßstrecke eine Eichstrecke vorzusehen, um die Laufzeitmeßergebnisse in eine möglichst genaue Weglänge umrechnen zu können. Allerdings sind dabei Meß- und Eichstrecke räumlich voneinander getrennt, damit die eigentliche Messung simultan mit der Eichmessung durchgeführt werden kann.

Aufgabe der Erfindung ist es, eine Einrichtung zur Positionserfassung eines längs einer vorgegebenen Strecke beweglichen Gegenstandes nach dem Oberbegriff des Anspruchs 1 zu schaffen, mit der es möglich ist, einfach und genau vorbestimmte Positionen des beweglichen Gegenstandes auf einem Verfahrweg großer Länge anzufahren.

Diese Aufgabe wird entsprechend dem kennzeichnenden Teil des Anspruchs 1 gelöst.

Weitere Ausgestaltungen der Erfindung sind der nachfolgenden Beschreibung und den Unteransprüchen zu entnehmen.

Die Erfindung wird nachstehend anhand eines in den beigefügten Abbildungen schematisch dargestellten Ausführungsbeispiels näher erläutert.

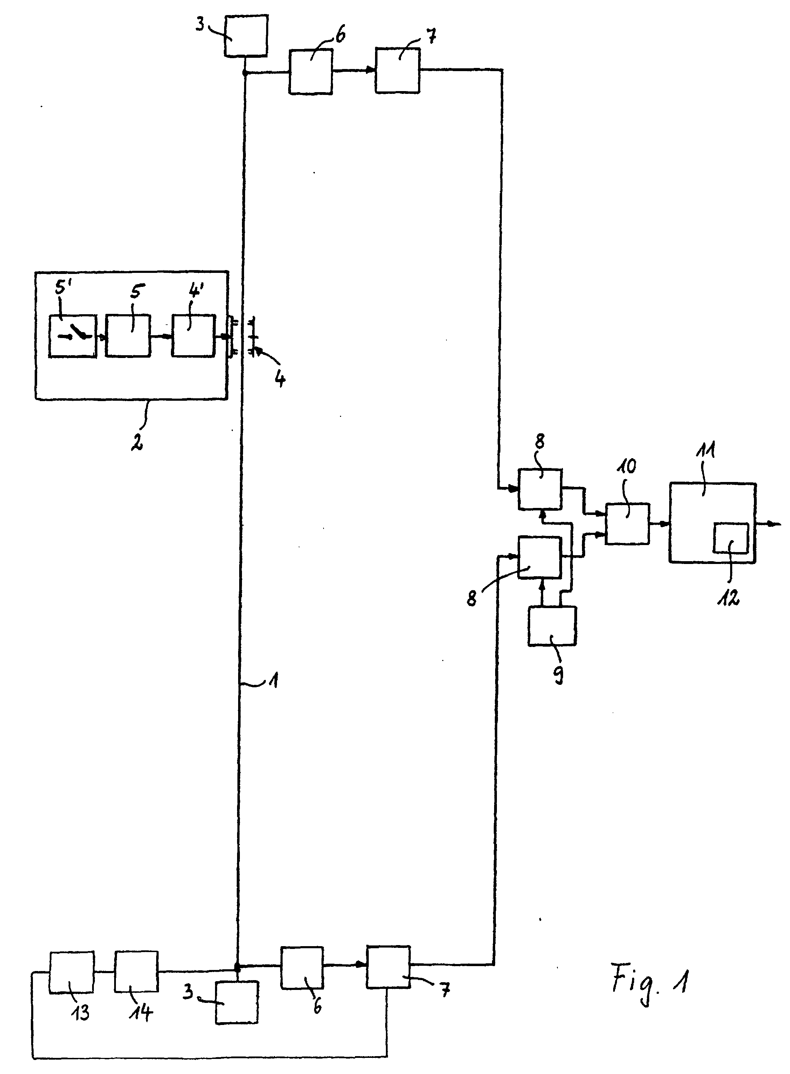

Fig. 1 zeigt schematisch eine Einrichtung zur Positionserfassung.
Fig. 2 zeigt ein Zeitschema bezüglich der Signale der Einrichtung von Fig. 1 im Fahrbetrieb.
Fig. 3 zeigt ein Zeitschema bezüglich der Signale der Einrichtung von Fig. 1 beim Eichen.

Die dargestellte Einrichtung zur Positionserfassung, die insbesondere zur Erfassung der Position eines Fahrstuhlkorbs verwendbar ist, umfaßt einen Schallsignalleiter 1, etwa eine Stahlschiene oder insbesondere einen Draht, der sich längs eines vorgegebenen Verfahrwegs erstreckt, längs dem ein beweglicher Gegenstand 2, etwa ein Fahrstuhlkorb, hin- und herbeweglich ist. Der Schallsignalleiter 1 mit vorbestimmter, gleichmäßiger Schallausbreitungsgeschwindigkeit ist an beiden Enden in einer dämpfenden Einspannung oder Halterung 3 gedämpft eingespannt bzw. gehalten.

Der bewegliche Gegenstand 2 trägt einen Signaleinkoppler 4, der mit einem Signalgeber 5, etwa einem Oszillator, über einen Signalanpassungskreis 4' verbunden ist. Der Signaleinkoppler 4, der insbesondere induktiv arbeitet, koppelt ein Schallsignal, das periodisch ein vom Signalgeber 5 empfangene Synchronisationsimpulse S umfaßt, in den Schallsignalleiter 1 ein. Die Synchronisationsimpulse S besitzen eine Taktzeit größer als die Laufdauer des Schallsignals von einem Ende des Schallsignalleiters 1 zu anderen.

Außerdem koppelt der Signaleinkoppler 4 Zusatzimpulse M ein, und zwar eine Vielzahl von Zusatzimpulsen M während jeder Taktzeit der Synchronisationsimpulse S. Die Taktzeit der Zusatzimpulse M ist derart, daß eine etwa zum Abbremsen und zum Anfahren einer genauen Position durch den Gegenstand 2 benötigte Distanzauflösung in Richtung des Verfahrwegs erreicht wird.

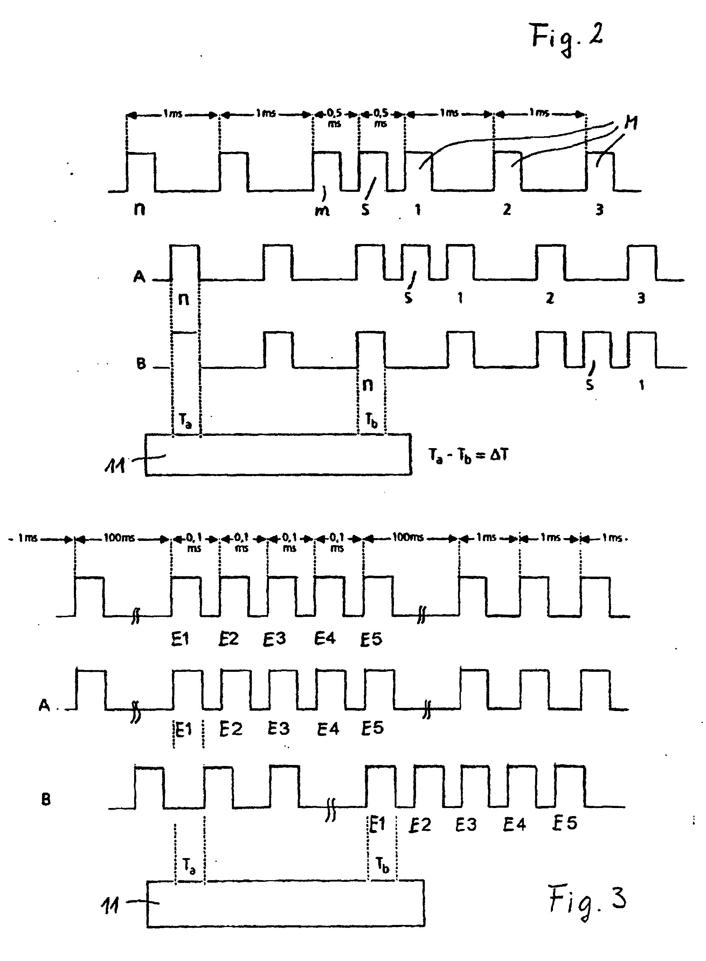

Die Synchronisationsimpulse S sind markiert, d.h. von den Zusatzimpulse M auswertemäßig unterscheidbar. Die Markierung kann beispielsweise dadurch erfolgen, daß ihre Taktzeit ein entsprechendes Vielfaches der Taktzeit der Zusatzimpulse M beträgt und sie bezüglich der Zusatzimpulse M zusätzlich, beispielsweise um eine halbe Taktzeit, zeitversetzt sind, vgl. die vom Signalgeber 5 erzeugte Impulsfolge der ersten Zeile von Fig. 2. Dann folgt einem Synchronisationsimpuls S jeweils eine vorbestimmte Anzahl von Zusatzimpulsen M.

Die Markierung kann aber auch in anderer Weise vorgenommen werden, so können sich die Synchronisationsimpulse S von den Zusatzimpulsen M durch Modulation, Impulsbreite, Impulshöhe od.dgl. unterscheiden.

Bei den einzukoppelnden Synchronisations- und Zusatzimpulsen S, M kann es sich um kurze elektromagnetische Impulse, etwa einfache Pulse oder um Pulsfolgen, oder um eine periodische Frequenzumtastung handeln.

An den Enden des Schallsignalleiters 1 ist jeweils ein Signalauskoppler 6 angeordnet. Hierbei handelt es sich vorzugsweise um einen piezoelektrischen Signalauskoppler 6, jedoch können auch induktiv oder kapazitiv arbeitende verwendet werden.

Jeder Signalauskoppler 6 ist mit einer Signalanpassungsschaltung 7 verbunden, deren Ausgangsleitungen jeweils zu einem Zähler 8 führen. Beide Zähler 8 werden von einem Taktgeber 9, einem Oszillator, getaktet. Die Taktzeit des Taktgebers 9 ist erheblich niedriger als die Laufzeit des Schalls von einem Ende des Schallsignalleiters 1 zum anderen und entsprechend der gewünschten Meßstreckenauflösung gewählt. Die Ausgänge der Zähler 8 werden einem Subtrahierer 10 zugeführt, der die Differenz der Ausgangssignale der Zähler 8 bildet und einer Auswerteeinheit 11, etwa einem Mikroprozessor, zuführt, wo das Ausgangsignal des Subtrahierers 10 ausgewertet wird.

Die Synchronisationsimpulse S dienen dazu, der Auswerteeinheit 11 anzuzeigen, welche nachfolgenden Zusatzimpulspaare zueinander gehören, nämlich die nach dem jeweiligen Synchronisationsimpuls S jeweils n-ten, d.h. ersten, zweiten, dritten usw. an den beiden Signalauskopplern 6 (in Fig. 2 mit A und B bezeichneten) zu unterschiedlichen Zeiten Tₐ und T_{b} einkommenden Zusatzimpulse M, damit die Auswerteeinheit 11 die zugehörige absolute Zeitdifferenz Tₐ- T_{b} = ΔT zwischen zusammengehörenden Zusatzimpulsen M und damit die Position des Gegenstandes 2 erfassen bzw. bestimmen kann.

Die Auswertung zur Positionserfassung erfolgt primär in bezug auf die Zusatzsignale M, allerdings können auch die Synchronisationsimpulse S diesbezüglich ausgewertet werden, und zwar vor allem, aber nicht nur dann, wenn der jeweils m-te Zusatzimpulse besonders markiert ist, um so als Synchronisationsimpuls S zu dienen.

Befindet sich der bewegliche Gegenstand 2 in der Mitte zwischen den Signalauskopplern 6, sind die Ausgänge der Zähler 8 gleich und ihre Differenz null. Befindet sich der Gegenstand 2 (bei vertikaler Strecke) oberhalb der Mitte, ist der Ausgang des an den oberen Signalauskoppler 6 angeschlossenen Zählers 8 kleiner als die des anderen. Aus der vom Subtrahierer 10 ermittelten Laufzeitdifferenz der zueinander gehörenden Zusatzimpulse M im Schallsignalleiter 1 und der bekannten Schallgeschwindigkeit in diesem ergibt sich die Entfernung des beweglichen Gegenstandes 2 von der Mitte. Da dann, wenn sich der bewegliche Gegenstand 2 unterhalb der Mitte befinden würde, die Differenz ein anderes Vorzeichen haben würde, ist auch bekannt, ob sich der beweglichen Gegenstand 2 oberhalb oder unterhalb der Mitte befindet, d.h. damit ist die genaue Lage des beweglichen Gegenstandes 2 errechenbar. Ein so von der Auswerteeinheit 11 erzeugbares, digitales oder analoges Positionssignal kann zur Nachfolgesteuerung verwendet werden.

Eine Überwachungsschaltung 12 (Watchdog) der Auswerteeinheit 11 kann zur einfachen Überwachung der Meßstrecke bei einer zeitkonstanten Einkopplung des Einkoppelsignals verwendet werden. Bei einer Verschmutzung, die in der Lage ist, das Signal auf dem Schallsignalleiter 1 zu bedämpfen, überschreitet die vom Subtrahierer 10 festgestellte Differenz einen vorbestimmten Wert, auf die die Überwachungsschaltung 12 anspricht, um ein entsprechendes Warnsignal od.dgl. auszulösen.

Zum Eichen ist in einem der Signalauskoppler 6 ein mit einem Eichschallsignalgeber 13 zur Abgabe eines Eichschallsignals verbundener Eichsignaleinkoppler 14 integriert, der während des Zeitraums, in dem keine Positionsbestimmung vorgenommen wird, d.h. der Gegenstand 2 stillsteht, in Tätigkeit gesetzt, etwa spannungsbeaufschlagt wird, um eine Eichung vorzunehmen. Das Eichschallsignal durchläuft dabei die gesamte, längenmäßig bekannte Eichstrecke zwischen den beiden Signalauskopplem 6 und die Auswerteeinheit 11 errechnet aus der vom Eichschallsignal zum anderen Signalauskoppler 6 durchlaufenen Eichstrecke und der Laufzeit des Eichschallsignals über die Eichstrecke eine Korrekturgröße für nachfolgende Positionserfassungen.

Der entsprechende Signalauskoppler 6 kann auch selbst zusätzlich als Eichsignaleinkoppler eingerichtet und mit dem Eichschallsignalgeber 13 koppelbar sein.

Wie aus Fig. 3 ersichtlich, wird der aus Signalen P (mit im wesentlichen konstanter Taktzeit von beispielsweise 1 ms) bestehende Signalstrom vom Signaleinkoppler 4 während des Stillstands des beweglichen Gegenstandes 2 für eine vorbestimmte Zeit unterbrochen, während der einc Reihe von Eichimpulsen E des Eichschallsignalgebers 13 eingekoppelt werden. Letzteres kann beispielsweise zwischen zwei längeren Pausen von z.B. 100 ms erfolgen, wobei die Eichimpulse E beispielsweise eine Folge von mehreren kurzen Impulsen ist, die eine Taktzeit von beispielsweise 0,1 ms besitzen können.

Durch jeden Eichzyklus erfolgt somit eine erneute Anpassung des Systems innerhalb seiner Meßauflösung an die mechanische Meßstrecke. Durch die Eichung-werden die linearen Fehler, wie sie durch Höhenänderung eines Gebäudes oder durch Änderung der Schallgeschwindigkeit im Schallsignalleiter 1 durch Temperatur- und/oder Diffusionseffekte auftreten, an der realen Länge der Meßstrecke kompensiert. Dies ermöglicht die Verwendung eines einfachen Schallsignalleiters in Form eines Drahtes.

Eine Synchronisation zwischen den Signalauskopplern 6, der Steuereinheit 11 und dem Eichschallsignalgeber 13 ist ohne Verkabelung möglich. Lediglich der bewegliche Gegenstand 2, etwa der Fahrkorb eines Fahrstuhls, ist mit einer Einrichtung zum Unterbrechen der Einkopplung von Schallsignalen zur Positionserfassung, etwa einem Signalgeber 5' zu versehen, die auf den Stillstand des Gegenstandes 2 bzw. auf die Schließbewegung der Fahrkorbtür od.dgl. anspricht, um den Signalgeber 5 bzw. den Signaleinkoppler 4 für eine vorbestimmte Zeit außer Betrieb zu setzen, damit es nicht zu Kollisionen zwischen Meßimpulsen und Pulsen zur Eichung kommt. In der einfachsten Ausführungsform umfaßt diese Einrichtung einen Unterbrecher für die Betriebsspannung des Signalgebers 5 bzw. des Signaleinkopplers 4. Wenn dann der entsprechende Signalauskoppler 6 während einer vorbestimmten Zeit, die beispielsweise etwas größer als die Taktzeit der Synchronisationsimpulse S ist, kein Signal empfängt, löst dieser über entsprechende Schaltkreise den Meßzyklus aus, indem der Eichschallsignalgeber 13 spannungsbeaufschlagt wird.

Die Schallgeschwindigkeit in einem Schallsignalleiter 1 aus Stahl liegt bei etwa 5300 m/s. Bei einer zeitlichen Auflösung von 188 ns, wozu eine Taktgeberfrequenz von 5,3 MHz notwendig ist, liegt die Ortsauflösung der Meßstrecke bei 1 mm.

Anstatt mit einem Singalgenerator verbunden zu sein, kann der Signaleinkoppler 4 auch von außen etwa durch die Auswerteeinheit 11 getriggert werden, um die Schallsignale in den Schallsignalleiter 1 einzukopplen. Umgekehrt kann auch der Signaleinkoppler 4 über ein elektrisches Signal die Auswerteeinheit 11 triggern, um den zeitlichen Beginn des jeweiligen Einkoppelns des Schallsignals in den Schallsignalleiter 1 für die Auswertung durch die Auswerteeinheit 11 festzulegen.

## Patentansprüche

1. Einrichtung zur Positionserfassung eines längs eines vorgegebenen Verfahrwegs beweglichen Gegenstandes (2), mit einem sich entlang des Verfahrwegs erstreckenden Schallsignalleiter (1) mit vorbestimmter, gleichmäßiger Schallausbreitungsgeschwindigkeit sowie mit einem an dem beweglichen Gegenstand (2) befindlichen Signaleinkoppler (4) zum Einkoppeln eines getakteten Schallsignals in den Schallsignalleiter (1), wobei an beiden Enden des Schallsignalleiters (1) Signalauskoppler (6) angeordnet sind, die mit einer Auswerteeinheit (11) zur Bestimmung der Laufzeitdifferenz des eingekoppelten Schallsignals von der Einkopplungsstelle zu den Signalauskopplern (6) und zur Erzeugung eines für die momentane Position des beweglichen Gegenstandes (2) auf dem Verfahrweg repräsentativen Signals verbunden sind, **dadurch gekennzeichnet, daß** an einem der Signalauskoppler (6) ein mit einem Eichschallsignalgeber (13) für ein Eichschallsignal verbundener Eichsignaleinkoppler (14) vorgesehen ist, wobei die Auswerteeinheit (11) aus der vom Eichschallsignal zum anderen Signalauskoppler (6) durchlaufenen Eichstrecke und der Laufzeit des Eichschallsignals über die Eichstrecke eine Korrekturgröße für nachfolgende Positionserfassungen errechnet.

2. Einrichtung nach Anspruch 1, **dadurch gekennzeichnet, daß** der Eichschallsignalgeber (13) und der Eichsignaleinkoppler (14) in einem der Signalauskoppler (6) integriert sind.

3. Einrichtung nach Anspruch 1 oder 2, **dadurch gekennzeichnet, daß** der bewegliche Gegenstand (2) mit einer Einrichtung zum Ingangsetzen eines Eichvorgangs während des Stillstands des Gegenstands (2) versehen ist.

4. Einrichtung nach Anspruch 3, **dadurch gekennzeichnet, daß** die Einrichtung zum Ingangsetzen eines Eichvorgangs einen Unterbrecher (5') für die Betriebsspannung des Signalgebers (5) und/oder des Signaleinkopplers (4) aufweist und der mit dem Eichschallsignalgeber verbundene Signalauskoppler (6) nach einer vorbestimmten signallosen Zeit den Eichschallsignalgeber in Gang setzt.

5. Einrichtung nach einem der Ansprüche 1 bis 4, **dadurch gekennzeichnet, daß** der Schallsignalleiter (1) ein Draht ist.

6. Einrichtung nach einem der Ansprüche 1 bis 5, **dadurch gekennzeichnet, daß** der Signaleinkoppler (4) als Schallsignal Synchronisationsimpulse (S) mit einer Taktzeit, die größer als die Schallaufzeit von einem Ende des Verfahrwegs zum anderen ist, sowie eine Vielzahl dazwischen befindlicher Zusatzimpulse (M) einkoppelt.

7. Einrichtung nach Anspruch 6, **dadurch gekennzeichnet, daß** die Synchronisationsimpulse (S) gegenüber den Zusatzimpulsen (M) markiert sind.

8. Einrichtung nach Anspruch 7, **dadurch gekennzeichnet, daß** der Takt der Synchronisationsimpulse (S) gegenüber demjenigen der Zusatzimpulsen (M) zeitversetzt ist.

9. Einrichtung nach einem der Ansprüche 6 bis 8, **dadurch gekennzeichnet, daß** die Synchronisationsimpulse (S) und die Zusatzimpulse (M) zur Bestimmung der Zeitlaufdifferenz der Auswerteeinheit (11) zugeführt werden.

10. Einrichtung nach einem der Ansprüche 1 bis 9, **dadurch gekennzeichnet, daß** die beiden Signalauskoppler (6) jeweils mit einem Zähler (8) verbunden sind, die über einen Taktgeber (9) getaktet und mit einem Subtrahierer (10) für die Ausgangssignale der beiden Zähler (8) verbunden sind.

11. Einrichtung nach Anspruch 10, **dadurch gekennzeichnet, daß** der Taktgeber (9) für die Zähler (8) mit einem für eine vorgesehene Meßstreckenauflösung notwendigen Mindestfrequenz arbeitet.

12. Einrichtung nach einem der Ansprüche 1 bis 11, **dadurch gekennzeichnet, daß** die Signalauskoppler (6) kapazitive, induktive oder insbesondere piezoelektrische Auskoppler sind.

13. Einrichtung nach einem der Ansprüche 10 bis 12, **dadurch gekennzeichnet, daß** die Auswerteeinheit (11) eine Überwachungsschaltung (12) umfaßt, die ein Warnsignal auslöst, wenn die vom Subtrahierer (10) festgestellte Differenz einen vorbestimmten Wert überschreitet.

14. Einrichtung nach einem der Ansprüche 1 bis 13, **dadurch gekennzeichnet, daß** der bewegliche Gegenstand (2) ein Aufzugkorb ist.

## Claims

1. A device for the detection of the position of a moveable object (2) in a longitudinal existing transport path, having a sound signal conductor (1) with a predetermined, equal sound distribution speed as well as a signal incoupling (4) for the coupling of a cyclical sound signal in the sound signal conductor (1) fitted to the moveable object (2) and extending along the transport path, whereby both ends of the sound signal conductor (1) are fitted with signal outcouplings (6) which are connected along the transport path with an evaluation unit (11) for the determination of the running time differential of the coupled sound signal from the coupling point to the signal outcoupling (6), and for the creation of a signal to determine the momentary position of a representatively positioned moveable object (2), and which is further **characterised by** the fact that one of the signal outcouplings (6) is equipped with a configuration signal coupler (14) which is connected to a configuration signal emitter (13) for the emission of a configuration signal, whereby the evaluation unit (11) will calculate the configuration path travelled by the configuration signal, i.e. up to the other signal outcoupling (6), and the travel duration of the configuration signal along the configuration path, and calculate a corrective value for subsequent position detection recordings.

2. A device according to Claim 1, **characterised in that** the configuration signal emitter (13) and the configuration signal coupler (14) are integrated into one of the signal outcouplings (6).

3. A device according to Claim 1 or 2, **characterised in that** the moveable object (2) is equipped with an apparatus for the starting of a configuration process during the resting period of the object (2).

4. A device according to Claim 3, **characterised in that** the apparatus for the starting of the configuration process is equipped with an interrupting mechanism (5') for the operating voltage being sent to the signal emitter (5) and/or the signal incoupling (4), and where the signal outcoupling (6) connected to the configuration signal emitter further starts the configuration signal emitter following a predetermined signal-free time period.

5. A device according to one of the preceding Claims 1 to 4, **characterised in that** the sound signal conductor (1) consists of a wire.

6. A device according to one of the preceding Claims 1 to 5, **characterised in that** the signal incoupling (4) couples synchronisation pulses (S) with a cycle time that is larger than the sound uptime from one end of the process path to the other of the sound signal, as well as a number of additional impulses (M) in between.

7. A device according to Claim 6, **characterised in that** the synchronisation pulses (S) are differentiated from the additional pulses (M).

8. A device according to Claim 7, **characterised in that** the cycle of the synchronisation pulses (S) in comparison with that of the additional pulses (M) incorporates a time lag.

9. A device according to one of the preceding Claims 6 to 8, **characterised in that** the synchronisation pulses (S) and the additional pulses (M) are fed to the evaluation unit (11) for the purpose of determining the running time period.

10. A device according to one of the preceding Claims 1 to 9, **characterised in that** both signal outcouplings (6) are each connected to a timer (8), which is timed via a cycle emitter (9), and where both output signals are connected to a subtractor (10).

11. A device according to Claim 10, **characterised in that** the cycle emitter (9) for the timers (8) functions with the aid of the minimum frequency necessary for the planned measurement path resolution.

12. A device according to one of the preceding Claims 1 to 11, **characterised in that** the signal outcouplings (6) consist of capacitive, inductive or preferably piezoelectric blockers.

13. A device according to one of the preceding Claims 10 to 12, **characterised in that** the evaluation unit (11) includes a monitoring switch (12) which will emit a warning signal when the difference detected by the subtractor (10) exceeds a predetermined value.

14. A device according to one of the preceding Claims 1 to 13, **characterised in that** the moveable object (2) consists of a retractable basket.

## Revendications

1. Dispositif pour la détection de la position d'un objet (2) mobile le long d'une voie de circulation prédéterminée, comprenant un conducteur de signaux sonores (1) qui s'étend le long de la voie de circulation et qui présente une vitesse de propagation des sons prédéterminée, constante, ainsi qu'un injecteur de signaux (4) qui se trouve sur l'objet mobile (2), et est destiné à injecter un signal sonore rythmé dans le conducteur de signaux sonores (1), cependant qu'aux deux extrémités du conducteur de signaux sonores (1), sont disposés des extracteurs de signaux (6) qui sont reliés à une unité d'analyse (11) destinée à déterminer la différence de temps de parcours du signal sonore injecté depuis le point d'injection jusqu'aux extracteurs de signaux sonores (6) et à produire un signal représentatif de la position momentanée de l'objet mobile (2) sur la voie de circulation, **caractérisé en ce qu'**à un des extracteurs de signaux (6), est prévu un injecteur de signaux d'étalonnage (14) qui est relié à un émetteur de signaux d'étalonnage (13) engendrant un signal d'étalonnage, l'unité d'analyse (11) calculant, sur la base du trajet d'étalonnage parcouru par le signal d'étalonnage pour atteindre l'autre extracteur de signaux (6), et du temps de parcours du signal d'étalonnage sur le trajet d'étalonnage, une grandeur de correction pour les détections de position suivantes.

2. Dispositif selon la revendication 1, **caractérisé en ce que** l'émetteur de signaux d'étalonnage (13) et l'injecteur de signaux d'étalonnage (14) sont intégrés dans l'un des extracteurs de signaux (6).

3. Dispositif selon la revendication 1 ou 2, **caractérisé en ce que** l'objet mobile (2) est équipé d'un dispositif pour la mise en marche d'un processus d'étalonnage pendant l'arrêt de l'objet (2).

4. Dispositif selon la revendication 3, **caractérisé en ce que** le dispositif présente, pour la mise en marche d'un processus d'étalonnage, un interrupteur (5') agissant sur la tension de service de l'émetteur de signaux (5) et/ou de l'injecteur de signaux (4), et l'extracteur de signaux (6) relié à l'émetteur de signaux sonores d'étalonnage met l'émetteur de signaux d'étalonnage en marche après un temps sans signaux prédéterminé.

5. Dispositif selon une des revendications 1 à 4, **caractérisé en ce que** le conducteur de signaux sonores (1) est un fil métallique.

6. Dispositif selon une des revendications 1 à 5, **caractérisé en ce que** l'injecteur de signaux (4) injecte, en tant que signal sonore, des impulsions de synchronisation (S) ayant un temps de cycle qui est plus long que le temps de parcours du son d'une extrémité de la voie de circulation à l'autre, ainsi qu'une pluralité d'impulsions additionnelles (M) qui se trouvent entre celles-ci.

7. Dispositif selon la revendication 6, **caractérisé en ce que** les impulsions de synchronisation (S) sont marquées pour se distinguer des impulsions additionnelles (M).

8. Dispositif selon la revendication 7, **caractérisé en ce que** le rythme des impulsions de synchronisation (S) est décalé dans le temps par rapport à celui des impulsions additionnelles (M).

9. Dispositif selon une des revendications 6 à 8, **caractérisé en ce que** les impulsions de synchronisation (S) et les impulsions additionnelles (M) sont transmises à l'unité d'analyse (11) pour la détermination de la différence de temps de parcours.

10. Dispositif selon une des revendications 1 à 9, **caractérisé en ce que** les deux extracteurs de signaux (6) sont reliés chacun à un compteur (8) qui est rythmé par un rythmeur (9) et est relié à un soustracteur (10) agissant sur les signaux de sortie des deux compteurs (8).

11. Dispositif selon la revendication 10, **caractérisé en ce que** le rythmeur (9) prévu pour les compteurs (8) travaille avec une fréquence minimale nécessaire pour assurer une résolution prévue du trajet de mesure.

12. Dispositif selon une des revendications 1 à 11, **caractérisé en ce que** les extracteurs de signaux sont des extracteurs capacitifs (6), inductifs ou, en particulier, piézoélectriques.

13. Dispositif selon une des revendications 10 à 12, **caractérisé en ce que** l'unité d'analyse (11) comprend un circuit de surveillance (12) qui déclenche un signal avertisseur lorsque la différence constatée par le soustracteur (10) devient supérieure à une valeur prédéterminée.

14. Dispositif selon une des revendications 1 à 13, **caractérisé en ce que** l'objet mobile (2) est une cabine d'ascenseur.
